# EUROPEAN PATENT APPLICATION

(11) **EP 4 596 284 A1**
(43) Date of publication of application: **06.08.2025**
(21) Application number: 25154834.3
(22) Date of filing: 29.01.2025
(51) Int. Cl.: B60K 6/387, B60K 6/445, B60W 10/06, B60W 10/08, B60W 10/26, B60W 20/10, B60W 20/13, B60W 20/40, B60W 50/08, B60K 6/48, B60W 50/14

(54) **HYBRID ELECTRIC VEHICLE**

(30) Priority: 31.01.2024 JP 2024013428
(71) Applicant: TOYOTA JIDOSHA KABUSHIKI KAISHA, Aichi-ken, 471-8571 (JP)
(72) Inventor: TSUKASHIMA, Hiroyuki, TOYOTA-SHI, AICHI-KEN, 471-8571 (JP)
(74) Representative: Cabinet Beau de Loménie

(57) **Abstract**

A hybrid electric vehicle includes an engine for driving, a motor for driving, a power storage device that is configured to exchange power with the motor, and a controller that is programmed to control the engine and motor to travel with the engine running in towing mode. The controller is programmed to permit the towing mode when the towing mode is indicated and a state of charge of the power storage device is higher than a threshold value, and the controller is programmed to prohibit the towing mode when the towing mode is indicated and the state of charge is lower than or equal to the threshold value.

## Description

### Technical Field

The present disclosure relates to a hybrid electric vehicle.

### Background

Conventionally, in a proposed hybrid electric vehicle that includes an engine for driving, a motor for driving, and a power storage device that exchanges power with the motor, the vehicle prohibits intermittent operation of the engine and continuously operates the engine during the towing mode, when towing a towed vehicle (for example, see Patent Document 1). In this hybrid electric vehicle, such control facilitates the assurance of sufficient driving force during the towing mode.

### [Citation List]

### [Patent Document]

[Patent Document 1] Japanese Patent Application Laid Open No. 2022-112447

### Summary

In the hybrid electric vehicle described above, during travel in the towing mode, the accelerator input is likely to increase, which in turn is likely to increase the power demand for driving. As a result, the output from the power storage device is likely to increase to meet the power demand, which in turn is likely to decrease the state of charge of the power storage device. If the state of charge of the power storage device decreases sufficiently during travel in the towing mode, the output of the motor is significantly limited to protect the power storage device, which may result in a relatively large reduction in the towing capacity of the vehicle and may affect drivability.

The main objective of the hybrid electric vehicle according to the present disclosure is to suppress a significant reduction in the towing capacity of the vehicle and the adverse effects on drivability during travel in the towing mode.

In order to achieve the above main object, the hybrid electric vehicle according to the present disclosure employs the following configuration.

A hybrid electric vehicle according to the present disclosure is a hybrid electric vehicle includes an engine for driving, a motor for driving, a power storage device that is configured to exchange power with the motor, and a controller that is programmed to control the engine and the motor to travel with the engine running in towing mode. The controller is programmed to permit the towing mode when the towing mode is indicated and a state of charge of the power storage device is higher than a threshold value, and the controller is programmed to prohibit the towing mode when the towing mode is indicated and the state of charge is lower than or equal to the threshold value.

In the hybrid electric vehicle according to the present disclosure, the controller permits the towing mode when the towing mode is indicated and the state of charge of the power storage device is higher than a threshold value. The controller prohibits the towing mode when the towing mode is indicated and the state of charge is lower than or equal to the threshold value. Such a conf iguration helps suppress a significant reduction in the towing capacity of the vehicle and the adverse effects on drivability caused by the state of charge of the power storage device sufficiently decreasing during travel in the towing mode.
[2] In the hybrid electric vehicle described above (the hybrid electric vehicle described in [1]), the hybrid electric vehicle may further include a notification device that is configured to notify information. The controller may be programmed to control the notification device to notify prohibition-related information related to the prohibition of the towing mode when the towing mode is prohibited. Here, the prohibition-related information may be information indicating the prohibition of the towing mode, information indicating the prohibition of the towing mode due to the state of charge being lower than or equal to the threshold value, or information indicating the maintenance of modes other than the towing mode (for example, a normal mode that involves intermittent operation of the engine during travel).
[3] In the hybrid electric vehicle described above (the hybrid electric vehicle described in [1] or [2]), the hybrid electric vehicle may further include a towing mode switch for a user to indicate the towing mode. The controller may be programmed to determine that the towing mode is indicated when the towing mode switch is operated by the user. Here, the towing mode switch may be configured as a hard switch or as a soft switch displayed on a display unit or similar device.
[4] In the hybrid electric vehicle described above (the hybrid electric vehicle described in [1] or [2]), the controller may be programmed to determine that the towing mode is indicated when the vehicle and a towed object are connected.
[5] In the hybrid electric vehicle described above (the hybrid electric vehicle described in [1] or [2]), the controller may be programmed to determine that the towing mode is indicated when a vehicle load exceeds a predetermined load.
[6] In the hybrid electric vehicle described above (the hybrid electric vehicle described in any one of [1] to [5]), the controller may be programmed to set the threshold value such that the threshold value increases as an elevation at vehicle's current location and/or an elevation of a planned travel route increases. The elevation of the planned travel route may be an average value of the elevations at each point along the planned travel route, or it may be a maximum value among the elevations at each point.
[7] In the hybrid electric vehicle described above (the hybrid electric vehicle described in any one of [1] to [6]), the controller may be programmed to set the threshold value such that the threshold value increases as a road gradient at a vehicle's current location and/or a road gradient of a planned travel route increases on an uphill side. The road gradient of the planned travel route may be an average value of the road gradients at each point along the planned travel route, or it may be a maximum value among the road gradients at each point.
[8] In the hybrid electric vehicle described above (the hybrid electric vehicle described in any one of [1] to [7]), the controller may be programmed to set the threshold value such that the threshold value is higher when the vehicle is traveling with the engine stopped compared to when the vehicle is traveling with the engine running.
[9] In the hybrid electric vehicle described above (the hybrid electric vehicle described in any one of [1] to [8]), the controller may be programmed to terminate the towing mode when the state of charge falls to or below a second threshold value that is lower the threshold value, during travel in the towing mode.
[10] In the hybrid electric vehicle described above (the hybrid electric vehicle described in [9]), the hybrid electric vehicle may further include a notification device that is configured to notify information. The controller may be programmed to control the notification device to notify termination-related information related to the termination of the towing mode when the towing mode is terminated due to the state of charge falling to or below the second threshold value during travel in the towing mode. Here, the termination-related information may be information indicating the termination of the towing mode, information indicating the termination of the towing mode due to the state of charge being lower than or equal to the second threshold value, or information indicating the switch to a mode other than the towing mode (for example, the normal mode described above).

### Brief Description of Drawings

Fig. 1 is a schematic diagram of a hybrid electric vehicle according to an embodiment of the present disclosure;
Fig. 2 is a flowchart showing an example of a normal mode processing routine;
Fig. 3 is a flowchart showing an example of a towing mode processing routine;
Fig. 4 is a flowchart showing an example of a normal mode processing routine according to another embodiment;
Fig. 5 is a flowchart showing an example of a normal mode processing routine according to yet another embodiment;
Fig. 6 is a flowchart showing an example of a normal mode processing routine according to yet another embodiment;
Fig. 7 is a flowchart showing an example of a normal mode processing routine according to yet another embodiment;
Fig. 8 is a flowchart showing an example of a normal mode processing routine according to yet another embodiment, and
Fig. 9 is a schematic diagram of a hybrid electric vehicle according to another embodiment.

### Description of Embodiments

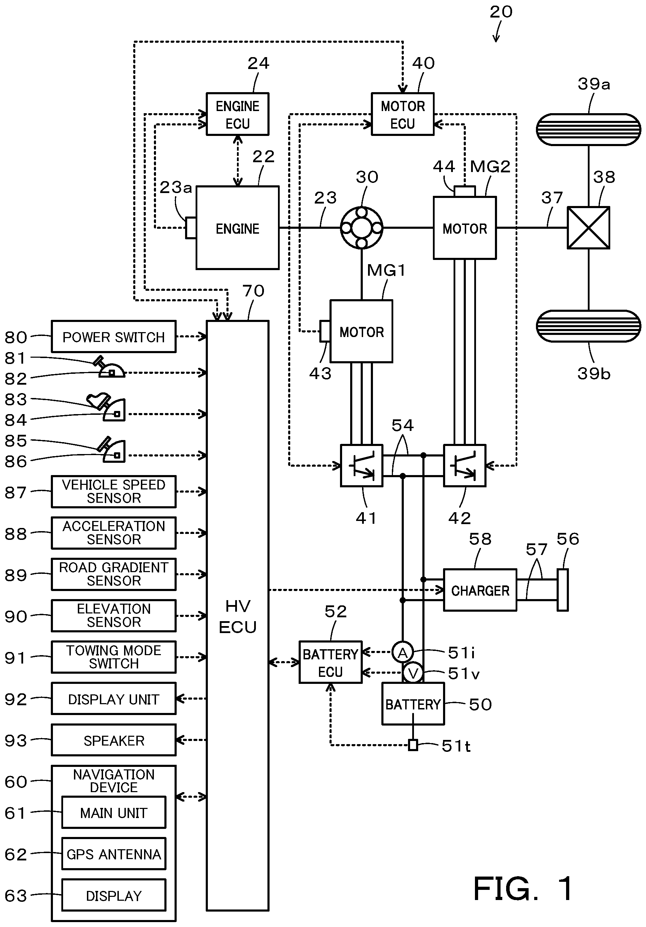

Embodiments of the present disclosure will be described with reference to the drawings. Fig. 1 is a schematic diagram of a hybrid electric vehicle 20 according to the embodiment of the present disclosure. As shown in Fig. 1, the hybrid electric vehicle 20 according to the embodiment includes an engine 22, a planetary gear 30, motors MG1 and MG2, inverters 41 and 42, a battery 50, a connector 56, a charger 58, a navigation device 60, and a hybrid electronic control unit (hereinafter referred to as "HVECU") 70.

The engine 22 is configured as an internal combustion engine that outputs power using fuels such as gasoline or diesel. The crankshaft 23 of the engine 22 is connected to the carrier of the planetary gear 30. The engine 22 is controlled in operation by an engine electronic control unit (hereinafter referred to as "engine ECU") 24.

The engine ECU 24 includes a microcomputer with a CPU, ROM, RAM, flash memory, input/output ports, and communication ports. The engine ECU 24 inputs signals from various sensors through the input ports. For example, the engine ECU 24 inputs a crank angle θcr from a crank position sensor 23a that detects the rotational position of the crankshaft 23. The engine ECU 24 outputs various control signals through the output ports. For example, the engine ECU 24 outputs control signals to the intake valves, fuel injectors, and ignition plugs of the engine 22 (all of which are not shown) . The engine ECU 24 calculates the rotational speed Ne of the engine 22 based on the crank angle θcr of the crankshaft 23. The engine ECU 24 communicates with the HVECU 70.

The planetary gear 30 is configured as a single pinion type planetary gear mechanism. The sun gear of the planetary gear 30 is connected to the rotor of the motor MG1. The ring gear of the planetary gear 30 is connected to a drive shaft 37 that is linked to drive wheels 39a and 39b via a differential gear 38. The carrier of the planetary gear 30, as described above, is connected to the crankshaft 23 of the engine 22.

The motors MG1 and MG2 are configured, for example, as synchronous generators, respectively. The rotor of the motor MG1 is connected to the sun gear of the planetary gear 30, as described above. The rotor of the motor MG2 is connected to the drive shaft 37. The inverters 41 and 42 are configured as inverter circuits that include multiple switching elements. The inverters 41 and 42 are connected to the battery 50 via a drive power line 54. A motor electronic control unit (hereinafter referred to as "motor ECU") 40 switches the multiple switching elements of the inverters 41 and 42, thereby driving the motors MG1 and MG2 to rotate.

The motor ECU 40 includes a microcomputer, similar to the engine ECU 24. The motor ECU 40 inputs signals from various sensors through input ports. For example, the motor ECU 40 inputs rotation positions θm1 and θm2 from rotation position sensors 43 and 44 that detect the rotor positions of the motors MG1 and MG2. The motor ECU 40 outputs various control signals through output ports. For example, the motor ECU 40 outputs control signals to the inverters 41 and 42. The motor ECU 40 calculates the electrical angles θe1 and θe2 and rotational speeds Nm1 and Nm2 of the motors MG1 and MG2 based on the rotation positions θm1 and θm2 of their rotors. The motor ECU 40 communicates with the HVECU 70.

The battery 50 is configured, for example, as a lithium-ion secondary battery or a nickel-metal hydride secondary battery. As described above, the battery 50 is connected to the inverters 41 and 42 via the drive power line 54. The battery 50 is managed by a battery electronic control unit (hereinafter referred to as "battery ECU") 52.

The battery ECU 52 includes a microcomputer, similar to the engine ECU 24. The battery ECU 52 inputs signals from various sensors through input ports . For example, the battery ECU 52 inputs a voltage Vb from a voltage sensor 51v attached between the terminals of the battery 50, a current Ib from a current sensor 51i attached to the output terminal of the battery 50, and a temperature Tb from a temperature sensor 51t attached to the battery 50. The battery ECU 52 calculates the state of charge SOC of the battery 50 based on the integrated value of the current Ib. The battery ECU 52 communicates with the HVECU 70.

The connector 56 is configured to be connectable to an external AC power source, such as a household power source or commercial power source. The external AC power source is provided at charging points, such as at home or at charging stations. The connector 56 is connected to the drive power line 54 via a charging power line 57. The charger 58 is provided on the charging power line 57 and is configured to convert AC power from the external power source into DC power and further transform the voltage for supply to the battery 50 when the connector 56 is connected to the external power source. Hereinafter, the process of supplying power from the external power source to the battery 50 via the charging power line 57 and the drive power line 54 to charge the battery 50 will be referred to as "external charging".

The navigation device 60 includes a main unit 61 with a built-in control unit, a GPS antenna 62, and a display 63. The control unit in the main unit 61 includes a microcomputer and a storage medium (such as a hard disk or SSD). The storage medium contains map information and other data. The map information includes service information (such as tourist information and parking lots), and road information for various travel segments (such as between traffic signals or intersections). The road information encompasses distance information, width information, lane count information, area information (urban or suburban), type information (general road or highway), gradient information, and legal speed limits. The GPS antenna 62 receives information regarding the vehicle's current location. The display 63 is configured as a touch panel display that shows various information such as the map information, the vehicle's current location, and the planned travel route from the vehicle's current location to the destination, while allowing the user to input various instructions. When the user operates the display 63 to set a destination, the main unit 61 establishes a planned travel route from the vehicle's current location to the destination based on the map information, the vehicle's current location, and the destination. The planned travel route is then displayed on the display 63 for route guidance. The navigation device 60 communicates with the HVECU 70.

The HVECU 70 includes a microcomputer, similar to the engine ECU 24. The HVECU 70 inputs signals from various sensors through input ports . For example, the HVECU 70 inputs a power switch signal from a power switch 80, a shift position SP from a shift position sensor 82 that detects a shift position of a shift lever 81, an accelerator opening Acc from an accelerator pedal position sensor 84 that detects a depression amount of an accelerator pedal 83, and a brake pedal position BP from a brake pedal position sensor 86 that detects a depression amount of a brake pedal 85. The HVECU 70 also inputs a vehicle speed V from a vehicle speed sensor 87, a vehicle acceleration α from an acceleration sensor 88, a road gradient θrd (positive values for uphill side and negative values for downhill side) from a gradient sensor 89, and an elevation EL from an elevation sensor 90. Additionally, the HVECU 70 inputs a signal from a towing mode switch 91 that indicates a towing mode for towing a trailer or other towed object. Examples of the towed objects include vehicle, boat, and the like. The HVECU 70 outputs various control signals through output ports. For example, the HVECU 70 outputs control signals to the charger 58, to a display unit 92 installed on an instrument panel, and to a speaker 93. As described above, the HVECU 70 communicates with the engine ECU 24, motor ECU 40, battery ECU 52, and the main unit 61 of the navigation device 60.

The hybrid electric vehicle 20 according to the embodiment selects one of a plurality of driving modes, including a normal mode and the towing mode, and operates in the select driving mode. The normal mode includes a CD (Charge Depleting) mode and a CS (Charge Sustaining) mode. The CD mode prioritizes electric driving (EV driving) over hybrid driving (HV driving) to decrease the state of charge SOC of the battery 50. The EV driving refers to driving that does not involve operation of the engine 22, while the HV driving refers to driving that involves operation of the engine 22. The CS mode combines the EV driving and the HV driving to maintain the state of charge SOC of the battery 50 within a management range, including a target state of charge SOC* (for example, the threshold value Shv described later) . The towing mode prohibits the EV driving and allows only the HV driving. As a result, the towing mode increases the towing capacity of the vehicle compared to when driving in the EV driving.

Here, the external charging and normal mode will be described. When the hybrid electric vehicle 20 is parked at a charging point, the connector 56 is connected to an external power source, and charging start conditions are satisfied, the hybrid electric vehicle 20 starts external charging control by controlling the charger 58 to perform the external charging. The hybrid electric vehicle 20 then terminates the external charging control when charging termination conditions are satisfied. The charging start conditions may, for example, include a condition in which a user requests the start of the external charging. The charging termination conditions may, for example, include a condition in which the state of charge SOC of the battery 50 reaches or exceeds a threshold value Sfl near full charge. After the external charging is terminated and the hybrid electric vehicle 20 is powered on, in the normal mode, the hybrid electric vehicle 20 first selects the CD mode, and then, when the state of charge SOC of the battery 50 falls to or below a threshold value Shv that is lower than the threshold value Sfl, the hybrid electric vehicle 20 switches to the CS mode.

Next, the HV driving and EV driving will be described in order. In the HV driving, the HVECU 70 first sets a torque demand Td* for driving based on the accelerator opening Acc and vehicle speed V, and then, the HVECU 70 sets a power demand Pd* for driving based on the set torque demand Td* and the rotational speed Nd of the drive shaft 37 (the rotational speed Nm2 of the motor MG2) . Next, the HVECU 70 sets a power demand Pe* for the engine 22 based on the power demand Pd* and a charging and discharging power demand Pb* of the battery 50. The HVECU 70 sets a target rotational speed Ne* and target torque Te* for the engine 22, and torque commands Tm1* and Tm2* for the motors MG1 and MG2, such that the power demand Pe* is output from the engine 22 and the torque demand Td* is output to the drive shaft 37. The HVECU 70 then sends the target rotational speed Ne* and target torque Te* for the engine 22 to the engine ECU 24, while also sending the torque commands Tm1* and Tm2* for the motors MG1 and MG2 to the motor ECU 40. The engine ECU 24 performs operation control of the engine 22 such that the engine 22 is operated based on the target rotational speed Ne* and target torque Te*. The motor ECU 40 controls the inverters 41 and 42 such that the motors MG1 and MG2 are driven by the torque commands Tm1* and Tm2*.

In the EV driving, the HVECU 70 first sets the torque demand Td*, just as in the HV driving. Then, the HVECU 70 sets the torque command Tm1* for the motor MG1 to a value of 0, and sets the torque command Tm2* for the motor MG2 to the torque demand Td*. The HVECU 70 sends the set torque commands Tm1* and Tm2* for the motors MG1 and MG2 to the motor ECU 40. The motor ECU 40 controls the inverters 41 and 42 such that the motors MG1 and MG2 are driven by the torque commands Tm1* and Tm2*.

In the embodiment, in both the normal mode and the towing mode, when the state of charge SOC of the battery 50 falls to or below a threshold value Smin that is somewhat lower than the threshold value Shv, the output of the motor MG2 is significantly limited to protect the battery 50. Therefore, in the towing mode, when the state of charge SOC of the battery 50 falls to or below the threshold value Smin, the towing capacity of the vehicle may be relatively significantly reduced.

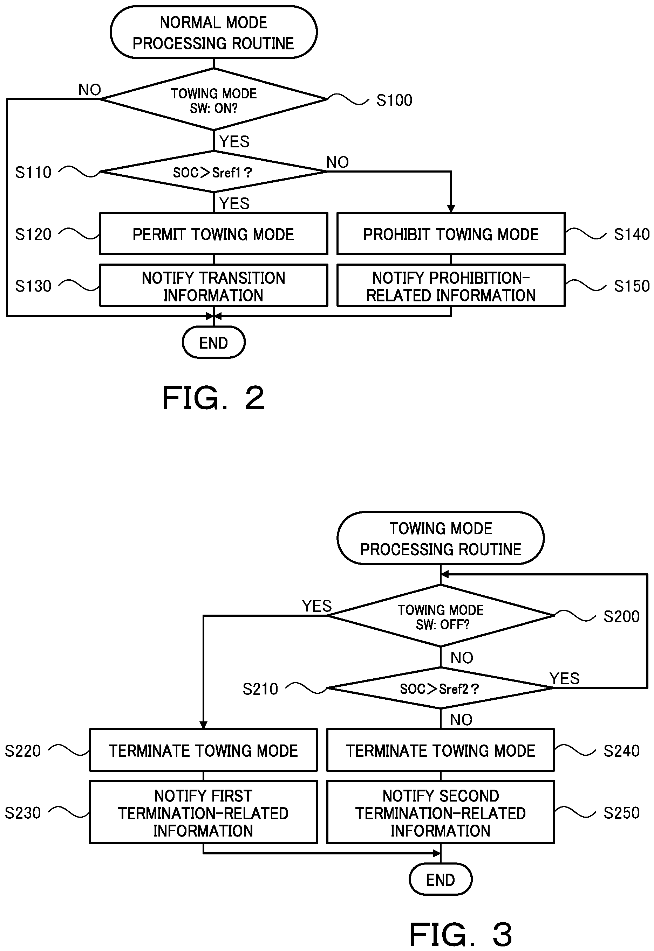

Next, the operation of the hybrid electric vehicle 20 according to the embodiment, particularly its operation when the vehicle is in the normal mode and the towing mode is requested, will be described. Fig. 2 is a flowchart showing an example of a normal mode processing routine executed by the HVECU 70. This routine is repeatedly executed when the vehicle is in the normal mode.

In the normal mode processing routine shown in Fig. 2, the HVECU 70 first determines whether the towing mode switch 91 is turned on (step S100) . In this process, the HVECU 70 determines whether the towing mode is requested. When the HVECU 70 determines that the towing mode switch 91 is not turned on, it determines that the towing mode is not requested and ends this routine. In this case, the hybrid electric vehicle 20 continues in the normal mode.

When the HVECU 70 determines in step S100 that the towing mode switch 91 is turned on, it determines that the towing mode is requested. The HVECU 70 determines whether the state of charge SOC of the battery 50 is higher than a threshold value Sref1 (step S110). Here, the threshold value Sref1 is a threshold value for determining whether a permit condition for the towing mode is satisfied. The threshold value Sref1 is set to a value that is somewhat higher than the threshold value Smin.

When the HVECU 70 determines in step S110 that the state of charge SOC of the battery 50 is higher than the threshold value Sref1, it determines that the permit condition for the towing mode is satisfied. The HVECU 70 permits the towing mode (step S120) . In this case, the hybrid electric vehicle 20 switches from the normal mode to the towing mode. When the hybrid electric vehicle 20 switches from the EV driving in the normal mode to the towing mode, it starts the towing mode by starting the engine 22 and starting the HV driving. On the other hand, when the hybrid electric vehicle 20 switches from the HV driving in the normal mode to the towing mode, it starts the towing mode while maintaining the HV driving.

Next, the HVECU 70 controls the display 63 to display transition information related to the switch from the normal mode to the towing mode on the display 63 of the navigation device 60 (step S130), and then ends this routine. The notification of the transition information may be displayed on the display unit 92 or output as audio through the speaker 93, instead of being displayed on the display 63.

When the HVECU 70 determines in step S110 that the state of charge SOC of the battery 50 is lower than or equal to the threshold value Sref1, it determines that the permit condition for the towing mode is not satisfied. The HVECU 70 prohibits the towing mode (step S140), and control the display 63 to display prohibition-related information related to the prohibition of the towing mode on the display 63 (step S150), and then ends this routine. In this case, the hybrid electric vehicle 20 continues in the normal mode. The notification of the prohibition-related information may be displayed on the display unit 92 or output as audio through the speaker 93, instead of being displayed on the display 63. The prohibition-related information may be information indicating the prohibition of the towing mode, information indicating the prohibition of the towing mode due to the state of charge SOC of the battery 50 being lower than or equal to the threshold value Sref1, or information indicating that a mode other than the towing mode (specifically, the normal mode) is being maintained. The prohibition-related information may, in addition to any one of these, include information prompting the charging of the battery 50. The prohibition-related information may be, for example, the following: "Due to difficulty in maintaining the vehicle speed in the towing mode, the towing mode is prohibited. Charge the battery and then turn the towing mode switch back on". or "A towing mode is prohibited. Park the vehicle in the safe location, charge the battery, and then turn the towing mode switch back on".

In the hybrid electric vehicle 20, during travel in the towing mode, the accelerator pedal 83 is likely to be pressed more heavily than during travel in the normal mode, which in turn is likely to increase the power demand Pd* for driving. As a result, the output from the battery 50 is likely to increase to meet the power demand Pd*, which in turn is likely to decrease the state of charge SOC of the battery 50. During travel in the towing mode, if the state of charge SOC of the battery 50 falls to or below the aforementioned threshold value Smin, the output of the motor MG2 is significantly limited, which may result in a relatively large reduction in the towing capacity of the vehicle, and may affect drivability. In consideration of these points, in the embodiment, when the HVECU 70 determines that the state of charge SOC of the battery 50 is lower than or equal to the threshold value Sref1, it prohibits the towing mode and notifies the prohibition of the towing mode. Such a configuration helps suppress a significant reduction in the towing capacity of the vehicle and the adverse effects on drivability caused by the state of charge SOC falling to or below the threshold value Smin during travel in the towing mode. In addition, the user enables to be notified the prohibition of the towing mode. In the embodiment, when the HVECU 70 prohibits the towing mode, it turns the towing mode switch 91 back to off and notifies the user by displaying this information on the display 63.

Next, the operation of the vehicle when it is in the towing mode will be described. Fig. 3 is a flowchart showing an example of the towing mode processing routine executed by the HVECU 70. This routine starts executing when the towing mode is started.

In the towing mode processing routine shown in Fig. 3, the HVECU 70 first determines whether the towing mode switch 91 is turned off (step S200) . In this process, the HVECU 70 determines whether the cancellation of the towing mode is requested. When the HVECU 70 determines that the towing mode switch 91 is not turned off, it determines that the cancellation of the towing mode is not requested. The HVECU 70 determines whether the state of charge SOC of the battery 50 falls to or below a threshold value Sref2 (step S210) . Here, the threshold value Sref2 is a threshold value for determining whether a termination condition for the towing mode is satisfied. The threshold value Srref2 is set to a value that is lower than the threshold value Sref1 and higher than the threshold value Smin. When the HVECU 70 determines that the state of charge SOC of the battery 50 has not fallen to or below the threshold value Sref2, it determines that the termination condition for the towing mode with respect to the state of charge SOC is not satisfied, and it returns to step S200. In this case, the hybrid electric vehicle 20 continues the towing mode.

When the HVECU 70 determines that the towing mode switch 91 is turned off in step S200, it determines that the cancellation of the towing mode is requested and terminates the towing mode (step S220) . In this case, the hybrid electric vehicle 20 switches from the towing mode to the normal mode. Next, the HVECU 70 controls the display 63 to display first termination-related information related to the termination of the towing mode on the display 63 (step S230), and then ends this routine. The notification of the first termination-related information may be displayed on the display unit 92 or output as audio through the speaker 93, instead of being displayed on the display 63. The first termination-related information may be information indicating the termination of the towing mode, or information indicating the switch to a mode other than the towing mode (specif ically the normal mode).

When HVECU 70 determines that the state of charge SOC of the battery 50 falls to or below the threshold value Sref2 in step S210, it determines that the termination condition for the towing mode with respect to the state of charge SOC is satisfied. The HVECU 70 terminates the towing mode (step S240), controls the display 63 to display second termination-related information related to the termination of the towing mode on the display 63 (step S250), and then ends this routine. The notification of the second termination-related information may be displayed on the display unit 92 or output as audio through the speaker 93, instead of being displayed on the display 63. The second termination-related information may be the same as the first termination-related information, or information indicating the termination of the towing mode due to the state of charge SOC of the battery 50 falling to or below the threshold value Sref1. In the embodiment, the towing mode is ended when the state of charge SOC of the battery 50 falls to or below the threshold value Sref2 that is higher than the threshold value Smin, that is, the towing mode is terminated before the state of charge SOC falls to or below the threshold value Smin. Such a configuration helps suppress the significant reduction in the towing capacity of the vehicle and the adverse effects on drivability caused by the state of charge SOC falling to or below the threshold value Smin during travel in the towing mode. In addition, the user enables to be notified the end of the towing mode.

As described above, when the towing mode switch 91 is turned on and the state of charge SOC of the battery 50 is higher than the threshold value Sref1, the hybrid electric vehicle 20 according to the present embodiment permits the towing mode and notifies the permission of the towing mode. On the other hand, when the towing mode switch 91 is turned on and the state of charge SOC of the battery 50 is lower than or equal to the threshold value Sref1, the hybrid electric vehicle 20 prohibits the towing mode and notifies the prohibition of the towing mode. Such a configuration helps suppress the significant reduction in the towing capacity of the vehicle and the adverse effects on drivability during travel in the towing mode. In addition, the user enables to be notified the prohibition of the towing mode.

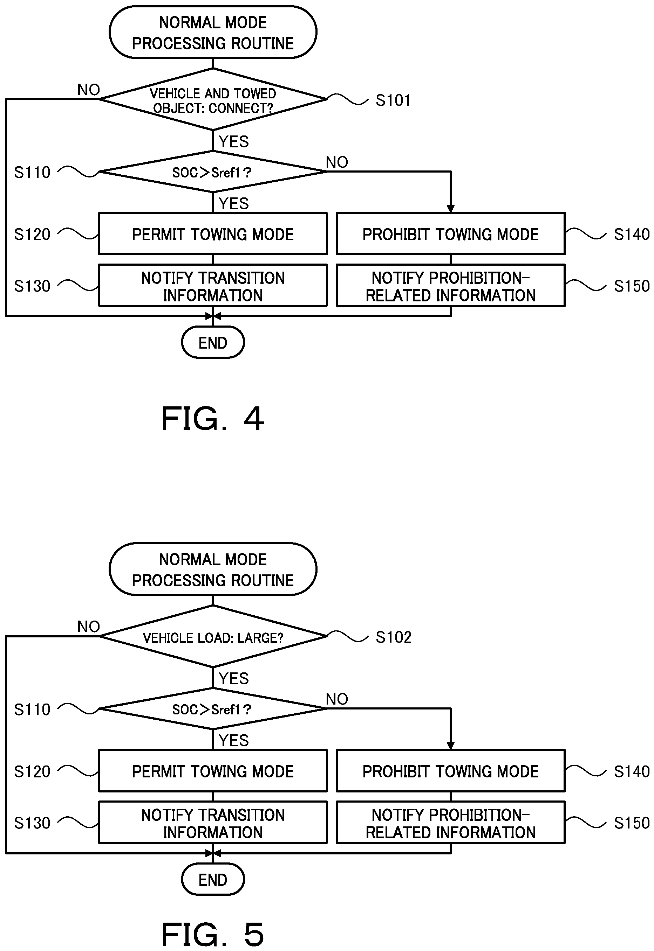

In the embodiment described above, when the towing mode switch 91 is turned on, the HVECU 70 determines that the towing mode is requested, and it permits or prohibits the towing mode depending on whether the state of charge SOC of the battery 50 is higher than the threshold value Srref1. However, this is not limiting. For example, the HVECU 70 may execute the normal mode processing routine shown in Fig. 4 or Fig. 5, instead of the normal mode processing routine shown in Fig. 2. The details will be described below in order.

The normal mode processing routine shown in Fig. 4 will be described. This routine differs from the normal mode processing routine shown in Fig. 2 in that the processing of step S100 is replaced with the processing of step S101. In this routine, the HVECU 70 first determines whether the vehicle and the towed object are connected (Step S101) . In this process, the HVECU 70 determines whether the towing mode is requested, similar to the processing of step S100. This process is performed based on a signal from a connection detection sensor that detects the presence or absence of connection between the vehicle and the towed object. When the HVECU 70 determines that the vehicle and the towed object are not connected, it determines that the towing mode is not requested, and ends this routine. On the other hand, when the HVECU 70 determines that the vehicle and the towed object are connected, it determines that the towing mode is requested, and proceeds to step S110. When the vehicle and the towed object are connected, the HVECU 70 determines that the towing mode is requested, and it enables to permit or prohibit the towing mode depending on whether the state of charge SOC of the battery 50 is higher than the threshold value Sref1.

When the HVECU 70 executes the normal mode routine shown in Fig. 4, instead of the processing of step S200 in the towing mode routine shown in Fig. 3, the HVECU 70 may determine whether the connection between the vehicle and the towed object is disconnected, thereby determining whether the cancellation of the towing mode is requested.

The normal mode processing routine shown in Fig. 5 will be described. This routine differs from the normal mode processing routine shown in Fig. 2 in that the processing of step S100 is replaced with the processing of step S102. In this routine, the HVECU 70 first determines whether the vehicle load exceeds a predetermined load (Step S102). In this process, the HVECU 70 determines whether the towing mode is requested, similar to the processing of step S100. The HVECU 70 may estimate the vehicle load based on the vehicle speed V and the torque demand Td* or power demand Pd*, and may determine whether the estimated vehicle load exceeds the expected load for the vehicle and occupants, thereby determining whether the vehicle load exceeds the predetermined load. The HVECU 70 may estimate a weight based on the torque demand Td* or power demand Pe* and the road gradient θrd, and may determine whether the estimated weight exceeds the expected weight for the vehicle and occupants, thereby determining whether the vehicle load exceeds the predetermined load. When the HVECU 70 determines in step S102 that the vehicle load does not exceed the predetermined load, it determines that the towing mode is not requested and ends the routine. On the other hand, when the HVECU 70 determines that the vehicle load exceeds the predetermined load, it determines that the towing mode is requested and proceeds to step S110 . When the vehicle load exceeds the predetermined load, the HVECU 70 determines that the towing mode is requested, and it enables to permit or prohibit the towing mode depending on whether the state of charge SOC of the battery 50 is higher than the threshold value Sref1.

When the HVECU 70 executes the normal mode routine shown in Fig. 5, instead of the processing of step S200 in the towing mode routine shown in Fig. 3, the HVECU 70 may determine whether the vehicle load is less than the predetermined load, thereby determining whether the cancellation of the towing mode is requested.

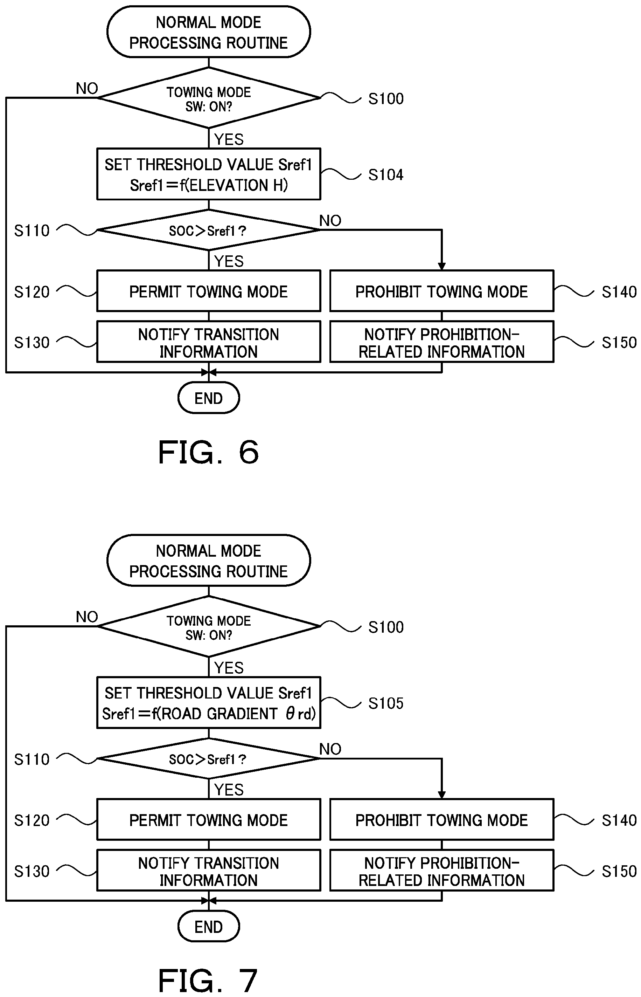

In the embodiment described above, the threshold value Sref1 is a constant value, but this is not limiting. For example, the HVECU 70 may execute any one of the normal mode processing routines in Fig. 6, Fig. 7, or Fig. 8, instead of the normal mode processing routine shown in Fig. 2. The details will be described below in order.

The normal mode processing routine shown in Fig. 6 will be described. This routine differs from the normal mode processing routine shown in Fig. 2 in that the processing of step S104 is added. In this routine, when the HVECU 70 determines that the towing mode switch 91 is turned on in step S100, it sets the threshold value Sref1 based on the elevation EL from the elevation sensor 90, that is, the elevation of the vehicle's current location (step S104), and then proceeds to step S110. In this case, the HVECU 70 sets the threshold value Sref1 based on, for example, the elevation EL and a first map. The first map is a map that shows a relationship between the elevation EL and the threshold value Sref1, and the first map is predetermined through experiments, analysis, machine learning, or other methods. The HVECU 70 applies the elevation EL to the first map and derives the corresponding threshold value Sref1 from the first map to set it. In the first map, the threshold value Sref1 is set such that it increases as the elevation EL increases. The threshold value Sref1 may be set such that it increases continuously (in a straight line or curved line) as the elevation EL increases. The threshold value Sref1 may be set such that it increases in a discontinuous manner (in steps) as the elevation EL increases. The threshold value Sref1 may be set to be higher when the elevation EL is higher than or equal to a threshold value ELref, compared to when the elevation is lower than the threshold value ELref. The higher the elevation EL, the lower the air density becomes . For this reason, the higher the elevation EL, the more likely the output of the engine 22 will decrease. In order to meet the power demand Pd* for driving, the output from the battery 50 is likely to increase, which in turn is likely to decrease the state of charge SOC of the battery 50. Therefore, during operation in the towing mode, the higher the elevation EL, the more likely the state of charge SOC will fall to or below the threshold value Smin. Based on this, in this variation, the HVECU 70 sets the threshold value Sref1 to increase as the elevation EL increases . As a result, the higher the elevation EL, the less likely the towing mode is to be permitted. Such a configuration helps suppress the significant reduction in the towing capacity of the vehicle and the adverse effects on drivability caused by the state of charge SOC falling to or below the threshold value Smin during travel in the towing mode.

In the normal mode processing routine shown in Fig. 6, the HVECU 70 sets the threshold value Sref1 based on the elevation EL of the vehicle's current location, but this is not limiting. For example, the HVECU 70 may use the elevation ELsr of the planned travel route from the vehicle's current location to the destination, instead of the elevation EL at the vehicle's current location. The elevation ELsr may be an average value of the elevations at each point along the planned travel route, or it may be a maximum value among the elevations at each point.

The normal mode processing routine shown in Fig. 7 will be described. This routine differs from the normal mode processing routine shown in Fig. 2 in that the processing of step S105 is added. In this routine, when the HVECU 70 determines that the towing mode switch 91 is turned on in step S100, it sets the threshold value Sref1 based on the road gradient θrd from the gradient sensor 89, that is, the road gradient θrd of the vehicle's current location (step S105), and then proceeds to step S110. In this case, the HVECU 70 sets the threshold value Sref1 based on, for example, the road gradient θrd and a second map. The second map is a map that shows a relationship between the road gradient θrd and the threshold value Sref1, and the second map is predetermined through experiments, analysis, machine learning, or other methods. The HVECU 70 applies the road gradient θrd to the second map and derives the corresponding threshold value Sref1 from the second map to set it. In the second map, the threshold value Sref1 is set such that it increases as the road gradient θrd increases. The threshold value Sref1 may be set such that it increases continuously (in a straight line or curved line) as the road gradient θrd increases. The threshold value Sref1 may be set such that it increases in a discontinuous manner (in steps) as the road gradient θrd increases. The threshold value Sref1 may be set to be higher when the road gradient θrd is greater than or equal to a threshold value θrdref, compared to when the road gradient θrd is less than the threshold value θrdref. The greater the road gradient θrd, the more likely the vehicle will decelerate, which in turn is likely to increase the accelerator opening Acc. For this reason, the greater the road gradient θrd, the more likely the power demand Pd* for driving will increase. In order to meet the power demand Pd*, the output from the battery 50 is likely to increase, which in turn is likely to decrease the state of charge SOC of the battery 50. Therefore, during operation in the towing mode, the greater the road gradient θrd, the more likely the state of charge SOC will fall to or below the threshold value Smin. Based on this, in this modification, the HVECU 70 sets the threshold value Sref1 to increase as the road gradient θrd increases. As a result, the greater the road gradient θrd, the less likely the towing mode is to be permitted. Such a configuration helps suppress the significant reduction in the towing capacity of the vehicle and the adverse effects on drivability caused by the state of charge SOC falling to or below the threshold value Smin during travel in the towing mode.

In the normal mode processing routine shown in Fig. 7, the HVECU 70 sets the threshold value Sref1 based on the road gradient θrd of the vehicle's current location, but this is not limiting. For example, the HVECU 70 may use the road gradient θrdsr of the planned travel route from the vehicle's current location to the destination, instead of the road gradient θrd of the vehicle's current location. The road gradient θrdsr may be an average value of the road gradients at each point along the planned travel route, or it may be a maximum value among the road gradients at each point.

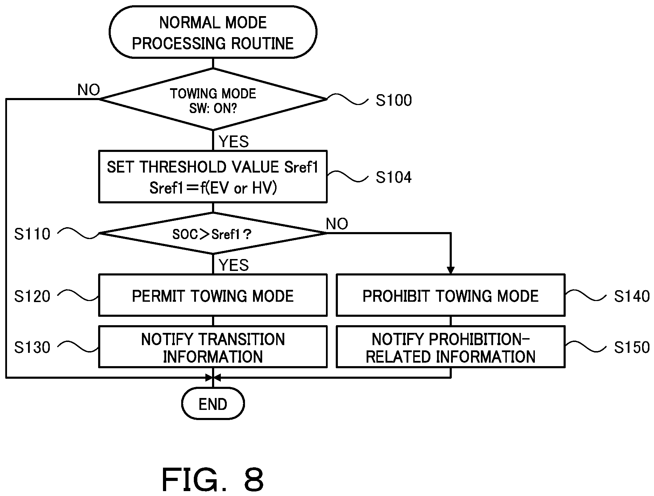

The normal mode processing routine shown in Fig. 8 will be described. This routine differs from the normal mode processing routine shown in Fig. 2 in that the processing of step S106 is added. In this routine, when the HVECU 70 determines that the towing mode switch 91 is turned on in step S100, it sets the threshold value Sref1 based on whether the vehicle is operating in the EV driving or HV driving (step S106), and then proceeds to step S110. In this case, the HVECU 70 sets the threshold value Sref1 to a higher value when the vehicle is operating in the EV driving compared to when the vehicle is operating in the HV driving. When switching from the EV driving in the normal mode to the towing mode, the vehicle starts the towing mode by starting the engine 22 and switching to the HV driving. On the other hand, when switching from the HV driving in the normal mode to the towing mode, the vehicle starts the towing mode while maintaining the HV driving. For this reason, when switching from the EV driving in the normal mode to the towing mode, the state of charge SOC of the battery 50 at the time of starting the towing mode is more likely to be lower compared to when switching from the HV driving in the normal mode to the towing mode. Based on this, in this modification, the HVECU 70 sets the threshold value Sref1 to a higher value when the vehicle is operating in the EV driving compared to when the vehicle is operating in the HV driving. As a result, when the vehicle is operating in the EV driving, the towing mode is less likely to be permitted compared to when the vehicle is operating in the HV driving. Such a configuration helps suppress the significant reduction in the towing capacity of the vehicle and the adverse effects on drivability caused by the state of charge SOC falling to or below the threshold value Smin during travel in the towing mode.

In the normal mode processing routine shown in Fig. 8, the HVECU 70 sets the threshold value Sref1 based on whether the vehicle is operating in the EV driving or HV driving, but this is not limiting. For example, the HVECU 70 may set the threshold value Sref1 based on whether the vehicle is in the CD mode or the CS mode in the normal mode.

In the normal mode processing routines shown in Figs. 6 to 8, the HVECU 70 sets the threshold value Sref1 based on any one of the following: the elevation EL, elevation Elsrv, road gradient θrd, road gradient θrdsr, whether the vehicle is operating in the EV driving or HV driving, or whether the vehicle is in the CD mode or CS mode in the normal mode, but this is not limiting. For example, the HVECU 70 may set the threshold value Sref1 based on multiple factors from following: the elevation EL, elevation Elsrv, road gradient θrd, road gradient θrdsr, whether the vehicle is operating in the EV driving or HV driving, or whether the vehicle is in the CD mode or CS mode in the normal mode.

The processing of step S100 in the normal mode processing routine shown in Figs. 6 to 8 may be replaced with the processing of step S101 in the normal mode processing routine shown in Fig. 4, or with the processing of step S102 in the normal mode processing routine shown in Fig. 5. In these cases, the processing of step S200 in the towing mode processing routine in Fig. 3 may also be replaced with a processing to determine whether the connection between the vehicle and the towed object are disconnected, or with a processing to determine whether the vehicle load is below the predetermined load.

In the embodiment, the battery 50 is used as the power storage device, but this is not limiting. For example, a capacitor may be used as the power storage device.

In the embodiment, the hybrid electric vehicle 20 includes the engine ECU 24, motor ECU 40, battery ECU 52, and HVECU 70, but this is not limiting. For example, at least two of the engine ECU 24, motor ECU 40, battery ECU 52, and HV ECU 70 may be integrated into a single unit.

In the embodiment, the hybrid electric vehicle 20 includes the connector 56, the charging power line 57, and the charger 58 for AC charging to charge the battery 50 using AC power from an external AC power source, but this is not limiting. For example, the hybrid electric vehicle 20 may not include the connector 56, the charging power line 57, and the charger 58. That is, the hybrid electric vehicle 20 may be a vehicle that does not perform the external charging. Alternatively, or in addition, the hybrid electric vehicle 20 may include a DC charging connector and DC charging power line for DC charging to charge the battery 50 using DC power from an external DC power source, instead of or in addition to the connector 56, the charging power line 57, and the charger 58.

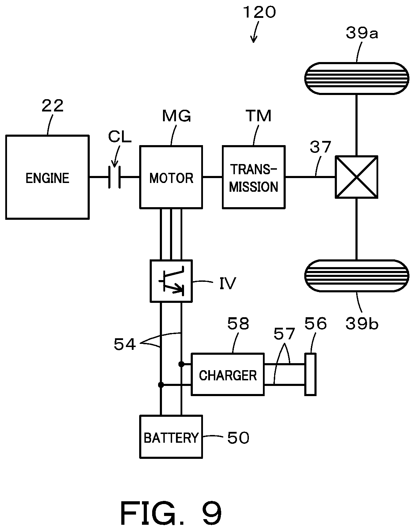

In the embodiment described above, the hybrid electric vehicle 20 includes the engine 22, the planetary gear 30, the motors MG1 and MG2, and the battery 50, but this is not limiting. For example, as shown in a hybrid vehicle 120 in Fig. 9, the hybrid vehicle 120 may include the engine 22, a clutch CL, a motor MG, an inverter IV, the battery 50, and a transmission TM. In the hybrid vehicle 120, the engine 22 is connected to the drive wheels 39a and 39b through the clutch CL, the motor MG, transmission TM, and the drive shaft 37, while the inverter IV driving the motor MG and the battery 50 are connected to the drive power line 54.

The correspondence relationship between the primary elements of the above embodiment and the primary elements of the disclosure described in Summary will be described. In the embodiment, the engine 22 corresponds to the "engine", the motor MG2 corresponds to the "motor", the battery 50 corresponds to the "power storage device", and the HVECU 70, engine ECU 24, and motor ECU 40 correspond to the "controller". In addition, at least one of the display 63, display unit 92, and speaker 93 corresponds to a "notification device."

The correspondence relationship between the primary elements of the embodiment and the primary elements of the disclosure, regarding which the problem is described in the Summary, should not be considered to limit the elements of the disclosure, regarding which the problem is described in the Summary, since the embodiment is only illustrative to specifically describes the aspects of the disclosure, regarding which the problem is described in the Summary. In other words, the disclosure, regarding which the problem is described in the Summary, should be interpreted on the basis of the description in the Summary, and the embodiment is only a specific example of the disclosure, regarding which the problem is described in the Summary.

The aspect of the disclosure is described above with reference to the embodiment. The disclosure is, however, not limited to the above embodiment but various modifications and variations may be made to the embodiment without departing from the scope of the disclosure.

### Industrial Applicability

The technique of the present disclosure is applicable to the manufacturing industries of the hybrid electric vehicles and so on.

## Claims

1. A hybrid electric vehicle (20, 120) comprising:
an engine (22) for driving;
a motor (MG2, MG) for driving;
a power storage device (50) that is configured to exchange power with the motor (MG2, MG); and
a controller (24, 40, 70) that is programmed to control the engine (22) and the motor (MG2, MG) to travel with the engine (22) running in towing mode,
wherein the controller (24, 40, 70) is programmed to permit the towing mode when the towing mode is indicated and a state of charge of the power storage device (50) is higher than a threshold value, and the controller (24, 40, 70) is programmed to prohibit the towing mode when the towing mode is indicated and the state of charge is lower than or equal to the threshold value.

2. The hybrid electric vehicle (20, 120) according to Claim 1, further comprising:
a notification device (63, 92, 93) that is configured to notify information,
wherein the controller (24, 40, 70) is programmed to control the notification device (63, 92, 93) to notify prohibition-related information related to the prohibition of the towing mode when the towing mode is prohibited.

3. The hybrid electric vehicle (20, 120) according to Claim 1 or 2, further comprising:
a towing mode switch (91) for a user to indicate the towing mode,
wherein the controller (24, 40, 70) is programmed to determine that the towing mode is indicated when the towing mode switch (91) is operated by the user.

4. The hybrid electric vehicle (20, 120) according to Claim 1 or 2,
wherein the controller (24, 40, 70) is programmed to determine that the towing mode is indicated when the vehicle (20, 120) and a towed object are connected.

5. The hybrid electric vehicle (20, 120) according to Claim 1 or 2,
wherein the controller (24, 40, 70) is programmed to determine that the towing mode is indicated when a vehicle load exceeds a predetermined load.

6. The hybrid electric vehicle (20, 120) according to any one of Claim 1 to 5,
wherein the controller (24, 40, 70) is programmed to set the threshold value such that the threshold value increases as an elevation at a vehicle's current location and/or an elevation of a planned travel route increases.

7. The hybrid electric vehicle (20, 120) according to any one of Claim 1 to 6,
wherein the controller (24, 40, 70) is programmed to set the threshold value such that the threshold value increases as a road gradient at a vehicle's current location and/or a road gradient of a planned travel route increases on an uphill side.

8. The hybrid electric vehicle (20, 120) according to any one of Claim 1 to 7,
wherein the controller (24, 40, 70) is programmed to set the threshold value such that the threshold value is higher when the vehicle is traveling with the engine (22) stopped compared to when the vehicle is traveling with the engine (22) running.

9. The hybrid electric vehicle (20, 120) according to any one of Claim 1 to 8,
wherein the controller (24, 40, 70) is programmed to terminate the towing mode when the state of charge falls to or below a second threshold value that is lower the threshold value, during travel in the towing mode.

10. The hybrid electric vehicle (20, 120) according to Claim 9, further comprising:
a notification device (63, 92, 93) that is configured to notify information,
wherein the controller (24, 40, 70) is programmed to control the notification device (63, 92, 93) to notify termination-related information related to the termination of the towing mode when the towing mode is terminated due to the state of charge falling to or below the second threshold value during travel in the towing mode.
